# FASCICULE DE BREVET EUROPEEN

(11) **EP 3 542 998 B1**
(45) Date de publication et mention de la délivrance du brevet: **07.07.2021**
(21) Numéro de dépôt: 19163363.5
(22) Date de dépôt: 18.03.2019
(51) Int. Cl.: B29C 70/24, B29C 70/50, B29C 70/46, B29D 99/00, B27N 3/08, B29K 101/12, B29C 70/52

(54) **DISPOSITIF ET PROCEDE DE FABRICATION D'UNE PIECE THERMOPLASTIQUE STRUCTURELLE**
VORRICHTUNG UND HERSTELLUNGSVERFAHREN EINES THERMOPLASTISCHEN STRUKTURTEILS
DEVICE AND METHOD FOR MANUFACTURING A STRUCTURAL THERMOPLASTIC PART

(30) Priorité: 21.03.2018 FR 1852432
(43) Date de publication de la demande: 25.09.2019
(73) Titulaire: Stelia Aerospace, 17300 Rochefort (FR)
(72) Inventeur: MAGNIN, Mr Pierre, 31130 BALMA (FR)
(74) Mandataire: Argyma

(56) Documents cités:
- WO-A1-2017/046693
- US-A- 5 229 562
- US-B2- 8 425 708

## Description

### DOMAINE TECHNIQUE GENERAL ET ART ANTERIEUR

La présente invention concerne le domaine de la fabrication de pièces aéronautiques et concerne plus précisément un dispositif de fabrication de pièces thermoplastiques de grandes dimensions destinées à former la structure d'un avion et un procédé correspondant, conformément aux revendications 1 et 9.

Par grandes dimensions, on entend qu'une des dimensions de la pièce aéronautique est supérieure à 1 m.

De manière connue, un avion comprend une structure primaire par laquelle transitent les efforts mécaniques et une structure secondaire montée sur la structure primaire. A ce titre, la structure primaire comprend notamment le fuselage, délimitant le corps de l'avion et définissant son enveloppe structurelle, la voilure, comprenant les deux ailes, permettant d'assurer la portance de l'avion en vol, et l'empennage placé à l'arrière de l'avion et permettant d'assurer sa stabilité.

La structure primaire comporte notamment plusieurs longerons. Selon l'état de la technique, un longeron possède une section transversale en U de manière à posséder une rigidité élevée. De manière connue, un longeron est réalisé dans un matériau métallique, par exemple en aluminium. Cependant un matériau métallique présente l'inconvénient d'être lourd, aussi les longerons sont de nos jours généralement fabriqués dans un matériau composite.

De manière connue, un longeron en matériau composite est réalisé par imprégnation de fibres de renforts dans une matrice thermodurcissable. Une telle matrice thermodurcissable est figée par polymérisation, c'est-à-dire au moyen d'une réaction chimique au cours de laquelle la matrice passe de l'état liquide ou visqueux à l'état solide sous l'effet de la chaleur. Lorsque la matrice thermodurcissable est chaude celle-ci est moulée afin d'obtenir la forme souhaitée, comme c'est le cas par exemple de longerons en forme de U, pour lesquels il est nécessaire de courber les deux branches latérales. Pour cela, la pièce composite thermodurcissable est moulée, par exemple, par thermocompression dans un autoclave. De manière connue, un autoclave est une enceinte hermétique dans laquelle la pression et la température peuvent être contrôlées et augmentées de manière à presser le matériau composite entre un moule et un contre-moule tout en chauffant l'ensemble, afin de donner à la pièce fabriquée sa forme finale. Cependant, un tel autoclave présente des dimensions limitées, ce qui ne permet pas la fabrication de pièces de grandes dimensions comme par exemple des longerons d'une aile d'avion, qui doivent tenir dans une enceinte confinée. De plus, de telles pièces composites sont longues à fabriquer. La polymérisation est réalisée par chauffage à entre 100 et 200°C pendant une durée de plusieurs heures. La cadence de fabrication est donc faible.

Aussi, il existe une volonté pour remplacer les pièces composites à matrice thermodurcissable par des pièces composites à matrice thermoplastique. Le cycle de fabrication d'une telle pièce est plus court mais présente l'inconvénient de devoir être chauffée à de très hautes températures, pouvant aller jusqu'à 410°C afin de consolider la pièce composite.

Pour former une telle pièce, les fibres de renfort sont noyées dans la matrice thermoplastique puis l'ensemble est chauffé et positionné entre deux moules pour être mis en forme par exemple dans une presse, appliquant une pression importante sur l'ensemble des moules au moyen d'un ou plusieurs vérins hydrauliques. Cependant, un tel procédé de fabrication présente l'inconvénient de nécessiter un alignement parfait des deux moules positionnés en vis-à-vis l'un de l'autre, afin de limiter les risques de déformation de la pièce, ainsi qu'une pression équivalente sur toute la longueur des moules, de manière à compresser l'ensemble du moule, ce qui est complexe à mettre en oeuvre pour la fabrication de pièces de grandes dimensions. Aussi, les procédés de fabrication selon l'art antérieur ne permettent pas la fabrication de pièces de grandes dimensions comme par exemple un longeron monobloc.

Selon l'état de l'art, il n'existe pas à ce jour de procédé alternatif à l'autoclave permettant la fabrication plus rapide de pièces en matériau composite thermoplastique. Seul un autoclave de très grandes dimensions permettrait la fabrication de pièces de grandes dimensions, un tel autoclave est très onéreux. La fabrication d'un seul tenant de pièces longues permet de limiter les jonctions dues à l'assemblage de plusieurs pièces permettant ainsi de limiter la présence de zones fragiles dans la structure primaire d'un avion.

Un des objectifs de la présente invention est de proposer un dispositif et un procédé de fabrication de pièces thermoplastiques simple, rapide et efficace, permettant la fabrication de pièces longues, d'un seul tenant, sans nécessiter l'utilisation d'un autoclave.

On connaît dans l'art antérieur par la demande de brevet WO2017046693 un procédé de fabrication de lames de parquet dans lequel un mélange sec est fondu. On connait par ailleurs par la demande de brevet US5229562 un procédé de consolidation d'une pièce métallique avec des fibres entre deux moules complémentaires.

### PRESENTATION GENERALE DE L'INVENTION

A cet effet, l'invention concerne un dispositif de fabrication d'une pièce thermoplastique structurelle, destinée à être intégrée à une structure primaire d'un d'avion, ladite pièce structurelle étant formée à partir d'une pièce d'ébauche comportant des fibres de renfort noyées dans une matrice thermoplastique, dispositif de fabrication comportant :
- un organe de support d'une pièce d'ébauche, l'organe de support s'étendant selon un axe longitudinal X,
- au moins un organe de chauffage configuré pour chauffer une portion locale de la pièce d'ébauche à une température permettant de faire fondre la matrice thermoplastique de la pièce d'ébauche,
- au moins un organe de refroidissement configuré pour refroidir la portion locale de la pièce d'ébauche à une température permettant de solidifier la matrice thermoplastique de la pièce d'ébauche,
- au moins un organe de compression principale configuré pour compresser la portion locale de la pièce d'ébauche contre l'organe de support de manière à diminuer sa porosité, l'organe de compression principale étant situé entre l'organe de chauffage et l'organe de refroidissement, et
- un système de déplacement d'amont en aval selon l'axe longitudinal de l'organe de chauffage, de l'organe de compression et de l'organe de refroidissement relativement à l'organe de support de manière à consolider chaque portion locale de la pièce d'ébauche de manière successive.

Grâce à l'invention, le dispositif de fabrication permet de traiter de manière consécutive chaque portion longitudinale de la pièce d'ébauche pour obtenir une pièce finie. Contrairement à l'art antérieur qui imposait de recourir à des équipements de dimensions supérieures à celles de la pièce à former, le dispositif de fabrication permet un traitement local et non un traitement global. Cela permet avantageusement de fabriquer des pièces structurelles de grandes dimensions. En outre, un tel dispositif de fabrication de pièces structurelles à matrice thermoplastique autorise des cadences de fabrications élevées qui n'étaient pas atteignables pour des pièces structurelles à matrice thermodurcissable. L'utilisation d'organes de chauffage, de compression et de refroidissement mobiles permet de diminuer localement la porosité d'une portion longitudinale de la pièce d'ébauche suite à son chauffage, le refroidissement permettant de figer les dimensions de la portion longitudinale.

Par consolider, on entend diminuer la porosité de la pièce et assurer la cohésion de la matière thermoplastique.

De préférence, le dispositif de fabrication comprend au moins un organe de compression amont configuré pour compresser la portion locale de la pièce d'ébauche contre l'organe de support, l'organe de compression amont étant situé en amont de l'organe de refroidissement. Un tel organe de compression permet de finaliser le dimensionnement de la portion longitudinale.

De manière préférée, le dispositif de fabrication comprend au moins un organe de compression aval configuré pour compresser la portion locale de la pièce d'ébauche contre l'organe de support, l'organe de compression aval étant situé en aval de l'organe de chauffage. Un tel organe de compression permet de bloquer la position de la portion longitudinale préalablement à son chauffage pour éviter tout défaut de position.

L'utilisation d'organes de compression orientés dans des directions différentes dans le plan transversal à l'axe longitudinal permet de compresser la portion longitudinale de manière homogène en tenant compte de sa forme. Selon un aspect, le dispositif de fabrication comprend une pluralité d'organes de compression principale, en particulier, au moins un organe de compression verticale, au moins un organe de compression latérale et au moins un organe de compression oblique.

De préférence, le dispositif de fabrication comportant au moins un module comprenant un châssis configuré pour être déplacé par le système de déplacement, l'organe de compression principale est relié audit châssis. Ainsi, le module est déplacé longitudinalement pour traiter consécutivement chaque portion longitudinale.

De préférence, l'organe de chauffage est relié au châssis dudit module, de préférence, en aval dudit organe de compression principale. Cela permet avantageusement de placer l'organe de compression au plus près de l'organe de chauffage et permettre une compression de la portion longitudinale lorsque sa température est encore élevée afin de réduire sa porosité de manière optimale.

De préférence encore, le dispositif de fabrication comportant au moins un module de refroidissement comprenant un châssis configuré pour être déplacé par le système de déplacement, l'organe de refroidissement est relié audit châssis. Le module de refroidissement est indépendant du module de chauffage de manière à pouvoir paramétrer la cinématique de refroidissement la plus adaptée à la pièce à fabriquer.

De manière préférée, au moins un organe de compression est relié audit châssis. Ainsi, la porosité de la portion longitudinale est également réduite au cours du refroidissement.

Selon un aspect préféré, l'organe de chauffage possède une section en U de manière à permettre un chauffage uniforme d'une portion locale de la pièce d'ébauche ayant une section en U.

De manière préférée, chaque organe de compression comporte au moins un organe de roulement de manière à permettre une compression lors de son déplacement par le système de déplacement.

L'invention concerne également un procédé de fabrication d'une pièce thermoplastique structurelle à partir d'un dispositif de fabrication selon l'une des revendications 1 à 8, destinée à être intégrée à une structure primaire d'un d'avion, à partir d'une pièce d'ébauche comportant des fibres de renfort noyées dans une matrice thermoplastique, la pièce d'ébauche étant supportée sur un organe de support s'étendant selon un axe longitudinal X, le procédé comporte :
- une étape de chauffage d'une portion locale de la pièce d'ébauche à une température permettant de faire fondre la matrice thermoplastique de la pièce d'ébauche puis
- une étape de compression de la portion locale de la pièce d'ébauche contre l'organe de support de manière à diminuer sa porosité puis
- une étape de refroidissement de ladite portion locale de la pièce d'ébauche à une température permettant de solidifier la matrice thermoplastique de la pièce d'ébauche.

De manière préférée, chaque portion locale de la pièce d'ébauche est successivement chauffée, compressée et refroidie.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'une pièce d'ébauche destinée à former une pièce thermoplastique structurelle d'un avion,
- la figure 2 est une représentation schématique en coupe d'un dispositif de fabrication selon une forme de réalisation de l'invention,
- la figure 3 est une représentation d'un dispositif de fabrication selon une forme de réalisation de l'invention,
- la figure 4 est une vue en coupe longitudinale d'un dispositif de fabrication selon une forme de réalisation de l'invention,
- les figures 5 à 7 représentent le déplacement des modules du dispositif de fabrication d'amont en aval sur l'organe de support,
- les figures 8 à 10 présentent différentes vues d'un module comportant une pluralité d'organes de compression et
- la figure 11 est une représentation schématique en perspective d'un organe de chauffage selon une forme de réalisation selon l'invention.

Il faut noter que les figures exposent l'invention de manière détaillée pour mettre en oeuvre l'invention.

### DESCRIPTION D'UN OU PLUSIEURS MODES DE REALISATION ET DE MISE EN OEUVRE

De manière connue, une pièce thermoplastique structurelle, destinée à être intégrée à une structure primaire d'un d'avion, est formée à partir d'une pièce d'ébauche comportant des fibres de renfort noyées dans une matrice thermoplastique. Comme indiqué précédemment, afin d'obtenir une pièce finie, la pièce d'ébauche doit être chauffée à une température supérieure à la température de fusion de la matrice thermoplastique tout en étant compressée afin d'augmenter sa densité et se rigidifier. A titre d'exemple, les fibres de renfort sont en carbone et la matrice est en PEEK ou PEKK.

La pièce d'ébauche 1 possède une flexibilité qui lui permet d'épouser la forme de la surface qui la supporte comme cela sera présentée par la suite. De manière connue, la pièce d'ébauche 1 est réalisée par drapage des fibres de renfort à plat ou de manière tridimensionnelle. Dans cet exemple, la pièce d'ébauche 1 est tridimensionnelle.

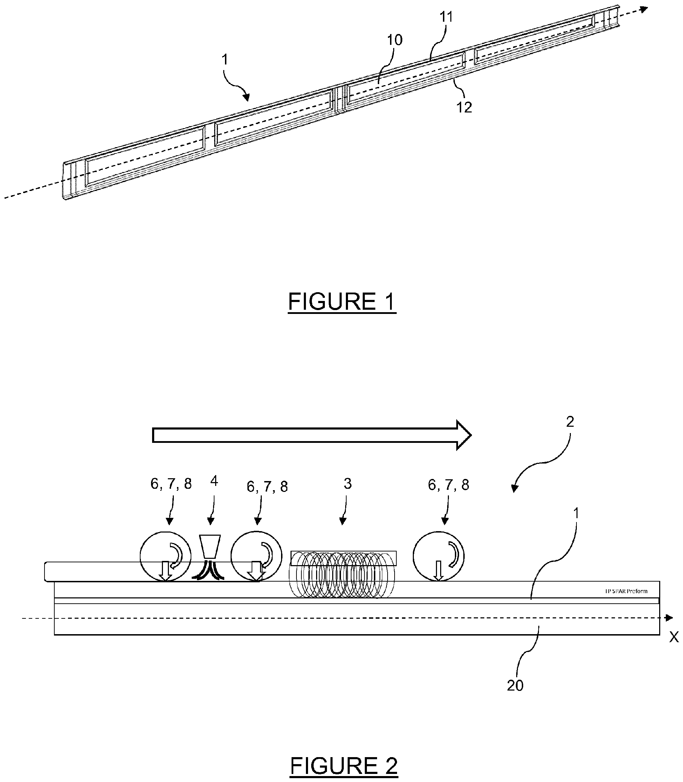

A titre d'exemple, en référence à la figure 1, il est représenté une pièce d'ébauche 1 qui s'étend longitudinalement selon un axe sur une longueur supérieure à 1 m. La pièce d'ébauche 1 possède une section en U qui varie selon l'axe longitudinal de manière à définir une base 10 et deux branches latérales 11, 12. Il va de soi que l'invention s'applique à différentes pièces structurelles, en particulier, celles de grandes dimensions, c'est-à-dire, ayant au moins une dimension supérieure à 1 m.

En référence à la figure 2, il est représenté de manière schématique un dispositif de fabrication 2 d'une pièce thermoplastique structurelle à partir d'une pièce d'ébauche 1 selon une forme de réalisation de l'invention.

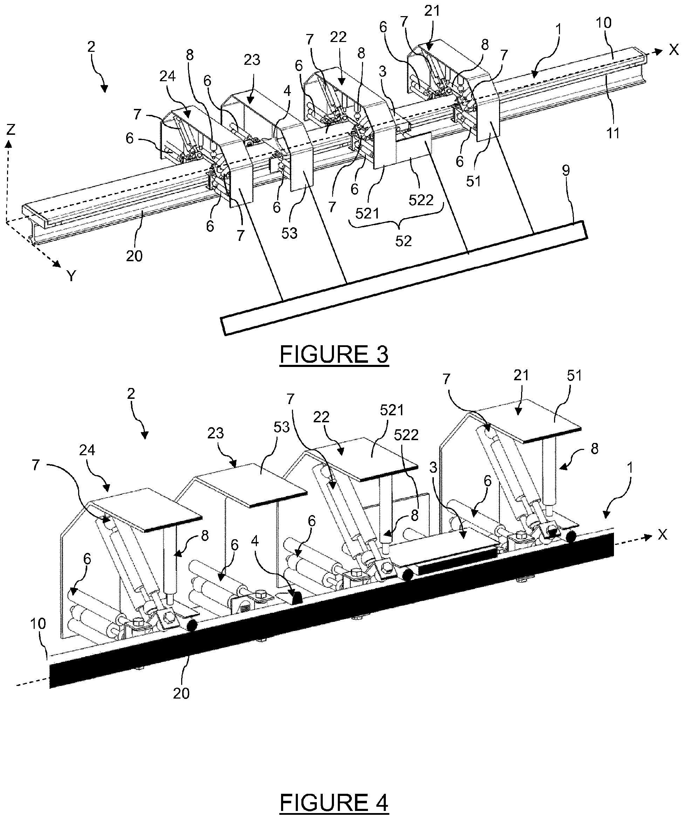

Dans cet exemple, le dispositif de fabrication 2 comporte un organe de support 20 d'une pièce d'ébauche 1 qui s'étend d'amont en aval, une pluralité d'organes de compression aval 6, 7, 8, un organe de chauffage 3, une pluralité d'organes de compression principale 6, 7, 8, un organe de refroidissement 4, une pluralité d'organes de compression amont 6, 7, 8 et un système de déplacement 9, représenté à la figure 3, des organes de compression 6, 7, 8, de l'organe de chauffage 3 et de l'organe de refroidissement 4 selon la direction longitudinale X de manière à transformer chaque portion longitudinale de la pièce d'ébauche 1 en une portion longitudinale finie.

En référence aux figures 2 et 3, l'organe de support 20 s'étend selon un axe longitudinal X de manière à supporter la pièce d'ébauche 1 selon sa longueur. L'organe de support 20 possède une surface supérieure de forme adaptée à la forme finie de la pièce thermoplastique structurelle. Dans cet exemple, l'organe de support 20 possède une surface de support ayant une section en U inversé. La section de la surface de support varie selon la longueur de l'organe de support 20 afin d'obtenir la forme souhaitée de la pièce thermoplastique structurelle.

Par la suite, le dispositif de fabrication 2 est défini dans un repère orthogonal X, Y, Z dans lequel l'axe X s'étend longitudinalement d'amont en aval, l'axe Y s'étend latéralement de la gauche vers la droite et l'axe Z s'étend verticalement du bas vers le haut.

Afin de permettre une compression optimale de la pièce d'ébauche 1 par le dispositif de fabrication 2, l'organe de support 20 possède une structure rigide, en particulier, en matériau métallique afin de ne pas se déformer au cours de la fabrication. L'organe de support 20 est également appelé enclume. Dans cet exemple, l'organe de support 20 possède une longueur supérieure à 2 m. Il est important que la longueur de l'organe de support 20 soit supérieure à celle de l'ébauche, en particulier, pour des raisons de manipulation et de consolidation du matériau de l'ébauche.

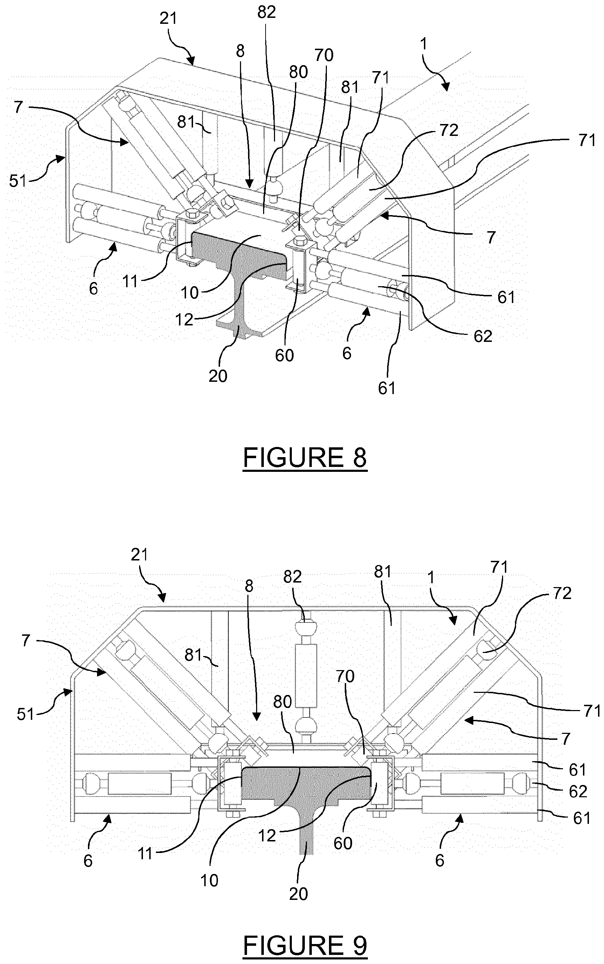

Comme illustré aux figures 8 à 10, le dispositif de fabrication 2 comporte une pluralité d'organes de compression 6, 7, 8 pour compresser une portion locale de la pièce d'ébauche 1 contre l'organe de support 20. Autrement dit, la portion locale de la pièce d'ébauche 1 est essorée de manière à augmenter sa densité et augmenter la résistance mécanique de la pièce thermoplastique structurelle. Les organes de compression sont tous orientés dans un plan transversal à l'axe X de manière à compresser successivement chaque portion longitudinale.

Dans cet exemple, chaque organe de compression comprend un organe de roulement, un organe de pression pour appuyer l'organe de roulement sur la pièce d'ébauche et plusieurs organes de guidage de l'organe de roulement. De manière préférée, l'organe de roulement se présente sous la forme d'un rouleau et l'organe de pression se présente sous la forme d'un vérin de pression. Les organes de guidage se présentent pour leur part sous la forme de coulisses de manière à autoriser un déplacement de l'organe de roulement uniquement en translation selon l'axe de l'organe de pression sans tourner autour dudit axe. Ainsi, l'organe de compression peut compresser la pièce d'ébauche 1 tout en se déplaçant longitudinalement selon l'axe X sur la pièce d'ébauche 1.

En référence aux figures 8 et 9, on distingue trois types d'organes de compression : un organe de compression verticale 8, un organe de compression latérale 6 et un organe de compression oblique 7. Chaque organe de compression réalise une compression dans un plan transversal à l'axe longitudinal X de manière à compresser successivement chaque portion longitudinale de la pièce d'ébauche 1.

Comme illustré aux figures 8 et 9, un organe de compression verticale 8 est configuré pour exercer une compression verticale vers le bas selon l'axe Z sur la base 10 de la pièce d'ébauche 1. A cet effet, la longueur de l'organe de roulement 80 de l'organe de compression verticale 8 est supérieure à la longueur latérale de la base 10 de la pièce d'ébauche 1 de manière à permettre une compression complète. De manière préférée, la pression verticale est comprise entre 50 et 300 psi (entre 3,45 et 20,7 bar).

De même, un organe de compression latérale 6 est configuré pour exercer une compression latérale selon l'axe Y sur une branche latérale 11, 12 de la pièce d'ébauche 1. A cet effet, la longueur de l'organe de roulement 60 de l'organe de compression latérale 6 est supérieure à la longueur maximale de la branche latérale 11, 12 de la pièce d'ébauche 1 de manière à permettre une compression complète. De manière préférée, la pression latérale est comprise entre 50 et 300 psi (entre 3,45 et 20,7 bar).

Enfin, un organe de compression oblique 7 est configuré pour exercer une compression oblique selon un axe oblique par rapport aux axes Y et Z à la jonction entre la base 10 et les branches 11, 12 de la pièce d'ébauche 1. Dans cet exemple, chaque organe de compression oblique 7 s'étend à 45° de l'axe vertical Z et de l'axe latéral Y. L'organe de compression oblique 7 permet une compression homogène de la courbure d'une pièce d'ébauche 1. De manière préférée, la pression oblique est comprise entre 50 et 300 psi (entre 3,45 et 20,7 bar).

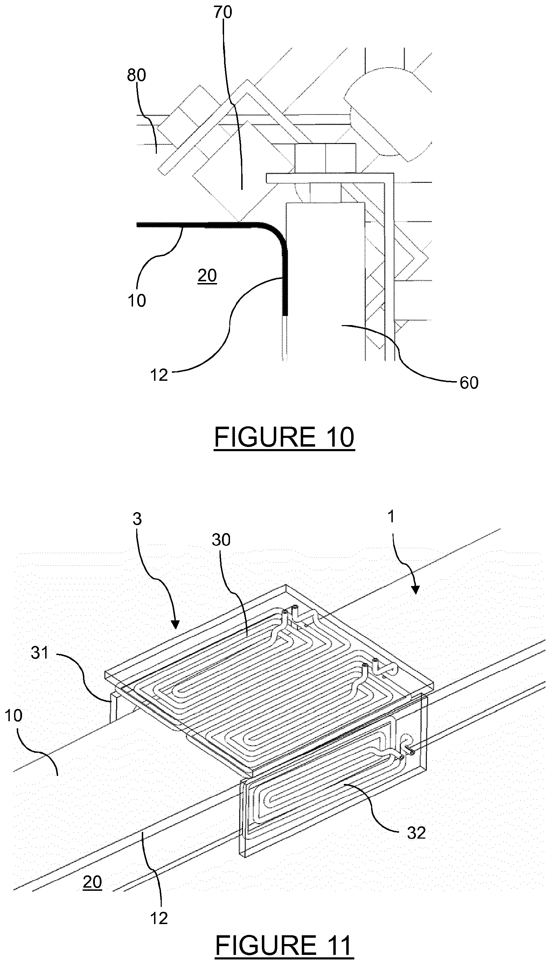

Comme illustré à la figure 10, l'utilisation d'une pluralité d'organes de compression 6, 7, 8 permet aux organes de roulement 60, 70, 80 d'entrer en contact avec toute la surface de la pièce d'ébauche 1 pour la compresser de manière homogène et uniforme.

Comme cela sera présenté par la suite, plusieurs organes de compression sont assemblés en modules pour permettre une compression verticale, latérale ou oblique à différentes positions longitudinales de manière à permettre une transformation optimale d'une pièce d'ébauche 1 en pièce finie.

Par la suite, un organe de compression est également caractérisé en fonction de sa position par rapport à l'organe de chauffage 3 et à l'organe de refroidissement 4. Un organe de compression positionné entre l'organe de chauffage 3 et l'organe de refroidissement 4 est désigné organe de compression principale. Un organe de compression positionné en aval de l'organe de chauffage 3 est désigné organe de compression aval tandis qu'un organe de compression positionné en amont de l'organe de refroidissement 4 est désigné organe de compression amont.

Il va de soi que le nombre et la taille des organes de compression 6, 7, 8 pourraient évoluer en fonction des besoins, en particulier, pour augmenter la surface d'échange thermique.

En référence à la figure 11, l'organe de chauffage 3 est configuré pour chauffer une portion locale de la pièce d'ébauche 1 à une température permettant de faire fondre la matrice thermoplastique de la pièce d'ébauche 1. En particulier, l'organe de chauffage 3 permet de chauffer à une température supérieure à 300°C, de préférence 360°C-380°C, pour atteindre la température de fusion de la matrice thermoplastique de la pièce d'ébauche 1.

L'organe de chauffage 3 est configuré pour réaliser un chauffage par induction, mais il va de soi que d'autres technologies de chauffage pourraient convenir, en particulier, par infrarouge ou résistif. Dans cet exemple, l'organe de chauffage 3 permet d'induire un courant dans les fibres de renfort de la pièce d'ébauche 1.

Comme illustré à la figure 11, l'organe de chauffage 3 possède une section en U inversée de manière à s'adapter à la forme de la pièce d'ébauche 1. Ainsi, la base 10 et les branches latérales 11, 12 de la pièce d'ébauche 1 peuvent être chauffées de manière homogène. L'organe de chauffage 3 comporte une paroi supérieure 30 et deux parois latérales 31, 32, chacune comportant des spires magnétiques. Ainsi, lorsqu'une portion longitudinale de la pièce d'ébauche 1 est située dans la cavité du U dont l'organe de chauffage 1 a la forme, la portion longitudinale est chauffée localement à haute température et devient malléable, ce qui permet une compression optimale par les organes de compression 6, 7, 8 comme cela sera présenté par la suite.

Il va de soi que la structure de l'organe de chauffage 3 pourrait être différente en fonction de la technologie de chauffage employée, par exemple, résistif ou infrarouge.

De manière préférée, l'organe de chauffage 3 peut être couplé à un ou plusieurs organes de mesure de la température afin de contrôler la température au cours de la fabrication.

En référence à la figure 3, l'organe de refroidissement 4 est configuré pour refroidir une portion locale de la pièce d'ébauche 1. En particulier, l'organe de refroidissement 4 permet de refroidir la portion longitudinale pour que celle-ci redevienne rigide afin de fixer ses dimensions. Dans cet exemple, l'organe de refroidissement 4 est configuré pour réaliser un refroidissement par soufflage d'air, en particulier, par soufflage d'air de manière à refroidir la pièce d'ébauche 1 à une température inférieure à la température de transition vitreuse de la matrice thermoplastique de la pièce d'ébauche 1. Il va de soi que d'autres technologies de refroidissement pourraient convenir, en particulier, un système de compression par rouleaux réfrigérés.

L'organe de refroidissement 4 se présente sous la forme d'une canalisation d'éjection d'air orientée verticalement vers le bas de manière à refroidir la base 10 de la pièce d'ébauche 1 ainsi que les branches latérales 11, 12 de la pièce d'ébauche 1. Ainsi, lorsqu'une portion longitudinale de la pièce d'ébauche 1 est située sous l'organe de refroidissement 4, celle-ci est refroidie localement de manière à rigidifier et figer sa structure.

Selon l'invention, en référence à la figure 3, le dispositif de fabrication 2 comporte un système de déplacement 9 de l'organe de chauffage 3, des organes de compression 6, 7, 8 et de l'organe de refroidissement 4 selon l'axe longitudinal X de l'organe de support 20 de manière à transformer chaque portion longitudinale de la pièce d'ébauche 1 en une portion finie.

Dans cet exemple, le système de déplacement 9 comporte différents organes de déplacement (roues, rail, etc.) pour déplacer les organes selon l'axe longitudinal X par rapport à l'organe de support 20. Néanmoins, il va de soi que d'autres moyens pourraient convenir, notamment, un portique aérien de déplacement. Le système de déplacement 9 peut être fixé au sol ou en hauteur.

Dans une forme de réalisation non représentée, le système de déplacement pourrait être configuré pour déplacer l'organe de support, les organes de chauffage, de compression principale et de refroidissement demeurant fixes. Seul un mouvement relatif doit être réalisé pour permettre la consolidation consécutive de chaque portion longitudinale.

Dans cet exemple de réalisation, les différents organes sont rassemblés en plusieurs modules.

En référence aux figures 3 à 7, le dispositif de fabrication 2 comporte un premier module aval de compression 21, désigné par la suite « module aval 21 », un deuxième module de chauffage et de compression 22, désigné par la suite « module de chauffage 22 », un troisième module de refroidissement et de compression 23, désigné par la suite « module de refroidissement 23 », et un quatrième module de compression amont 24, désigné par la suite « module amont 24 ». Dans cet exemple de réalisation, le module aval 21 et le module amont 24 sont identiques. Aussi, par souci de clarté et de concision, seul le module aval 21 va être dorénavant présenté.

En référence aux figures 8 à 10, il est représenté un module aval 21 comprenant un châssis 51 qui possède une forme de U inversé définissant une concavité dans laquelle sont montés :
- deux organes de compression latérale 6 respectivement configurés pour exercer une pression sur les branches 11, 12 de la pièce d'ébauche 1,
- un organe de compression verticale 8 configuré pour exercer une pression sur la base 10 de la pièce d'ébauche 1 et
- deux organes de compression oblique 7 respectivement configurés pour exercer une pression à la jonction des branches 11, 12 et de la base 10 de la pièce d'ébauche 1.

Comme illustré aux figures 8 et 9, chaque organe de compression 6, 7, 8 comprend un organe de roulement 60, 70, 80, un organe de pression 62, 72, 82 reliant l'organe de roulement 60, 70, 80 au châssis 51 et deux organes de guidage 61, 71, 81 reliant l'organe de roulement 60, 70, 80 au châssis 51, en particulier, de part et d'autre de l'organe de pression 62, 72, 82. Comme indiqué précédemment, chaque organe de roulement 60, 70, 80 se présente sous la forme d'un rouleau, chaque organe de pression 62, 72, 82 se présente sous la forme d'un vérin et chaque organe de guidage 61, 71, 81 se présente sous la forme d'une coulisse.

Le châssis 51 du module aval 21 est relié au système de déplacement 9 afin de permettre le déplacement du module aval 21 selon la direction longitudinale X. Lors du déplacement longitudinal selon l'axe X, la base 10 et les branches latérales 11, 12 de la pièce d'ébauche 1 sont compressées par les organes de compression 6, 7, 8 contre l'organe de support 20, ce qui permet d'augmenter sa densité en comprimant les fibres et la matrice thermoplastique. Le module aval 21 permet principalement de plaquer la pièce d'ébauche 1 à l'état non consolidé contre l'organe de support 20.

En référence aux figures 3 et 4, il est représenté un module de chauffage 22 comprenant un châssis 52 comprenant une partie aval 522 sur laquelle est fixé l'organe de chauffage 3 et une partie amont 521 possédant une forme de U inversé définissant une concavité dans laquelle sont montés :
- deux organes de compression latérale 6 respectivement configurés pour exercer une pression sur les branches 11, 12 de la pièce d'ébauche 1,
- un organe de compression verticale 8 configuré pour exercer une pression sur la base 10 de la pièce d'ébauche 1,
- deux organes de compression oblique 7 respectivement configurés pour exercer une pression à la jonction des branches 11, 12 et de la base 10 de la pièce d'ébauche 1.

Les organes de compression 6, 7, 8 du module de chauffage 22 sont identiques à ceux du module aval 21 et ne seront pas présentés de nouveau. Les organes de compression 6, 7, 8 du module de chauffage 22 sont des organes de compression principale étant donné qu'ils agissent directement sur une portion de la pièce d'ébauche 1 qui a été préalablement chauffée comme cela sera présenté par la suite. De manière avantageuse, la proximité des organes de roulement 6, 7, 8 et de l'organe de chauffage 3 permet de compresser de manière efficace une portion locale étant donné qu'elle est dans un état malléable.

La force de compression de chaque organe de compression 6, 7, 8 peut avantageusement être réglée de manière individuelle.

La partie aval 522 du châssis 52 comporte deux parois latérales pour supporter latéralement l'organe de chauffage 3 de manière à ce que ce dernier puisse chauffer la base 10 et les branches 11, 12 de la pièce d'ébauche 1. Les parois latérales de la partie aval 522 du châssis 52 sont reliées à l'extrémité aval de la partie amont 521 en forme de U inversé comme illustré à la figure 3. Ainsi, l'étape de compression principale peut être réalisée directement suite au chauffage.

De manière analogue à précédemment, le châssis 52 du module de chauffage 22 est relié au système de déplacement afin de permettre le déplacement du module de chauffage 22 selon la direction longitudinale X. Lors du déplacement longitudinal selon l'axe X, une portion locale de la pièce d'ébauche 1 est chauffée par l'organe de chauffage 3 à une température supérieure à la température de fusion de la matrice thermoplastique de manière à rendre la pièce d'ébauche 1 malléable puis directement contrainte dimensionnellement par les organes de compression principale 6, 7, 8 afin de lui donner sa forme finale, ce qui permet d'augmenter sa densité en comprimant les fibres et la matrice thermoplastique.

En référence aux figures 3 et 4, il est représenté un module de refroidissement 23 comprenant un châssis 53 possédant une forme de U inversé définissant une concavité dans laquelle sont montés deux organes de compression latérale 6 respectivement configurés pour exercer une pression sur les branches 11, 12 de la pièce d'ébauche 1 et un organe de refroidissement 4 configuré pour souffler de l'air sur la base 10 et sur les branches 11 et 12 de la pièce d'ébauche 1.

Les organes de compression 6 du module de refroidissement 23 sont identiques à ceux du module aval 21 et ne seront pas présentés de nouveau. Les organes de compression 6 du module de refroidissement 23 sont des organes de compression amont étant donné qu'ils agissent directement sur une portion de la pièce d'ébauche 1 qui a été préalablement refroidie.

De manière analogue à précédemment, le châssis 53 du module de refroidissement 23 est relié au système de déplacement 9 afin de permettre le déplacement du module de refroidissement 23 selon la direction longitudinale X. Lors du déplacement longitudinal selon l'axe X, une portion locale de la pièce d'ébauche 1 est refroidie par l'organe de refroidissement 4 à une température inférieure à la température de transition vitreuse de la matrice thermoplastique de manière à rendre la pièce d'ébauche 1 rigide et fixer sa forme. La distance entre les modules 21-24 et leurs vitesses d'avancement peuvent être avantageusement réglées.

Un exemple de mise en oeuvre d'un procédé de fabrication d'une pièce thermoplastique structurelle, destinée à être intégrée à une structure primaire d'un d'avion, à partir d'une pièce d'ébauche 1 comportant des fibres de renfort noyées dans une matrice thermoplastique va être dorénavant présenté.

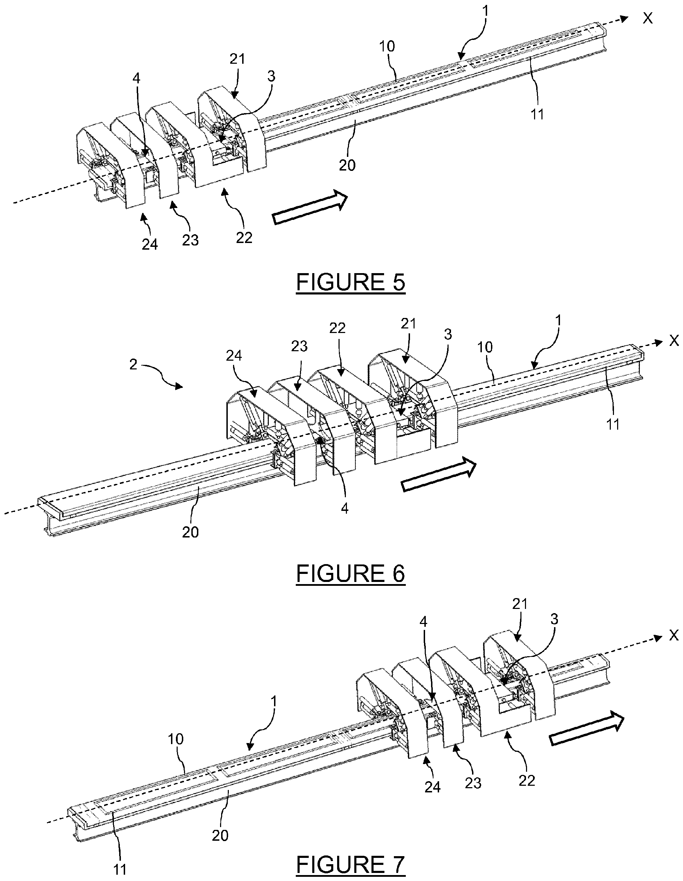

En référence aux figures 5 à 7, la pièce d'ébauche 1 est supportée sur un organe de support 20 s'étendant selon un axe longitudinal X orienté d'amont en aval.

Les modules 21-24 du dispositif de fabrication 2, situés en amont de la pièce d'ébauche 1, sont déplacés de manière continue ou séquentielle vers l'aval par le système de déplacement 9 (non représenté sur ces figures).

Chaque portion longitudinale de la pièce d'ébauche 1 est traitée consécutivement par le module aval 21, le module de chauffage 22, le module de refroidissement 23 et le module amont 24.

Le module aval 21 plaque de manière préliminaire la pièce d'ébauche 1 dans son ensemble afin de la préparer au chauffage. La pièce d'ébauche 1 est ainsi immobilisée.

Puis, le module de chauffage 22 chauffe la portion locale de la pièce d'ébauche 1 par induction avec les fibres de renfort à une température supérieure à la température de fusion de la matrice thermoplastique (température de l'ordre de 360°C-380°C) afin de ramollir la pièce d'ébauche 1 puis compresse la portion locale de la pièce d'ébauche 1 contre l'organe de support 20 de manière à la consolider. L'intégration d'organes de compression 6, 7, 8 et d'un organe de chauffage 4 dans un même module de chauffage 22 permet avantageusement aux organes de compression 6, 7, 8 de déformer de manière optimale la pièce d'ébauche 1 qui a été rendu malléable. Les étapes de chauffage et de compression sont directement enchainées, la matrice thermoplastique n'ayant pas le temps de se refroidir à une température inférieure à la température de transition vitreuse de la matrice thermoplastique. Autrement dit, le module de chauffage 22 permet de donner à la portion locale une forme proche de sa forme finale et de réduire sa porosité.

Le module de refroidissement 23 permet de refroidir la portion locale en figeant la matrice thermoplastique, celle-ci étant refroidie à une température inférieure à la température de transition vitreuse de la matrice thermoplastique. L'intégration d'organes de compression latérale 6 permet en outre de guider la matière lors du refroidissement. De manière analogue au module aval 21, le module amont 24 compresse et plaque la pièce d'ébauche 1 afin de lui donner sa forme finale. Ainsi, chaque portion locale de la pièce d'ébauche 1 est successivement chauffée, compressée et refroidie par les modules 21-24 comme illustré aux figures 5 à 7.

Contrairement à une pièce structurelle réalisée avec des fibres de renfort noyées dans une matrice thermodurcissable nécessitant un chauffage de longue durée à une température comprise entre 100°C et 200°C, une pièce structurelle réalisée avec des fibres de renfort noyées dans une matrice thermoplastique peut être réalisée par un chauffage de courte durée à une température supérieure à sa température de fusion, ce qui permet d'obtenir des cadences de fabrication importante.

En outre, grâce à l'invention, chaque portion longitudinale de la pièce d'ébauche 1 peut être transformée en une portion finie de manière locale. Cela est particulièrement avantageux pour la fabrication de pièces de grandes dimensions, il n'est pas nécessaire de prévoir un équipement tel qu'un autoclave ou une presse ayant des dimensions supérieures à la pièce à fabriquer. Il n'existe ainsi plus de contraintes liées aux dimensions de la pièce à fabriquer.

Par ailleurs, contrairement à un préjugé technique qui imposait de réaliser un chauffage et une compression de manière simultanée, la présente invention propose de réaliser une compression de manière successive au chauffage, ce qui est avantageux.

## Revendications

1. Dispositif de fabrication (2) d'une pièce thermoplastique structurelle, destinée à être intégrée à une structure primaire d'un d'avion, ladite pièce structurelle étant formée à partir d'une pièce d'ébauche (1) comportant des fibres de renfort noyées dans une matrice thermoplastique, dispositif de fabrication (2) comportant :
- un organe de support (20) d'une pièce d'ébauche (1), l'organe de support (20) s'étendant selon un axe longitudinal (X),
- au moins un organe de chauffage (3) configuré pour chauffer une portion locale de la pièce d'ébauche (1) à une température supérieure à 300°C permettant de rendre malléable la matrice thermoplastique de la pièce d'ébauche (1),
- au moins un organe de refroidissement (4) configuré pour refroidir la portion locale de la pièce d'ébauche (1) à une température permettant de solidifier la matrice thermoplastique de la pièce d'ébauche (1),
- au moins un organe de compression principale (6, 7, 8) configuré pour compresser la portion locale de la pièce d'ébauche (1) contre l'organe de support (20) de manière à diminuer sa porosité, l'organe de compression principale (6, 7, 8) étant situé entre l'organe de chauffage (3) et l'organe de refroidissement (4),
- un système de déplacement (9) d'amont en aval selon l'axe longitudinal (X) de l'organe de chauffage (3), de l'organe de compression (6, 7, 8) et de l'organe de refroidissement (4) relativement à l'organe de support (20) de manière à consolider chaque portion locale de la pièce d'ébauche (1) de manière successive et
- au moins un module (22) comprenant un châssis (52) configuré pour être déplacé par le système de déplacement (9), l'organe de compression principale (6, 7, 8) étant relié audit châssis (52).

2. Dispositif de fabrication (2) selon la revendication 1, comprenant au moins un organe de compression amont (6, 7, 8) configuré pour compresser la portion locale de la pièce d'ébauche (1) contre l'organe de support (20), l'organe de compression amont (6, 7, 8) étant situé en amont de l'organe de refroidissement (4).

3. Dispositif de fabrication (2) selon l'une des revendications 1 à 2, comprenant au moins un organe de compression aval (6, 7, 8) configuré pour compresser la portion locale de la pièce d'ébauche (1) contre l'organe de support (20), l'organe de compression aval (6, 7, 8) étant situé en aval de l'organe de chauffage (3).

4. Dispositif de fabrication (2) selon l'une des revendications 1 à 3, comprenant une pluralité d'organes de compression principale (6, 7, 8), en particulier, au moins un organe de compression verticale (8), au moins un organe de compression latérale (6) et au moins un organe de compression oblique (7).

5. Dispositif de fabrication (2) selon l'une des revendications 1 à 4, dans lequel, l'organe de chauffage (3) est relié au châssis (52) dudit module (22), de préférence, en aval dudit organe de compression principale (6, 7, 8).

6. Dispositif de fabrication (2) selon l'une des revendications 1 à 5, dans lequel, le dispositif comportant au moins un module de refroidissement (23) comprenant un châssis (53) configuré pour être déplacé par le système de déplacement (9), l'organe de refroidissement (4) est relié audit châssis.

7. Dispositif de fabrication (2) selon l'une des revendications 1 à 6, dans lequel, l'organe de chauffage (3) possède une section en U de manière à permettre un chauffage uniforme d'une portion locale de la pièce d'ébauche (1) ayant une section en U.

8. Dispositif de fabrication (2) selon l'une des revendications 1 à 7, dans lequel chaque organe de compression comporte au moins un organe de roulement (60, 70, 80) de manière à permettre une compression lors de son déplacement par le système de déplacement (9).

9. Procédé de fabrication d'une pièce thermoplastique structurelle à partir d'un dispositif de fabrication (2) selon l'une des revendications 1 à 8, destinée à être intégrée à une structure primaire d'un d'avion, à partir d'une pièce d'ébauche (1) comportant des fibres de renfort noyées dans une matrice thermoplastique, la pièce d'ébauche étant supportée sur un organe de support (20) s'étendant selon un axe longitudinal (X), le procédé comporte :
- Une étape de chauffage d'une portion locale de la pièce d'ébauche (1) à une température supérieure à 300°C permettant de faire fondre la matrice thermoplastique de la pièce d'ébauche (1) puis
- Une étape de compression de la portion locale de la pièce d'ébauche (1) contre l'organe de support (20) de manière à augmenter sa densité puis
- Une étape de refroidissement de ladite portion locale de la pièce d'ébauche (1) à une température permettant de solidifier la matrice thermoplastique de la pièce d'ébauche (1).

10. Procédé de fabrication selon la revendication 9 dans lequel, chaque portion locale de la pièce d'ébauche (1) est successivement chauffée, compressée et refroidie.

## Patentansprüche

1. Vorrichtung zur Herstellung (2) eines thermoplastischen Strukturteils, das zur Integration in eine Primärstruktur eines Flugzeugs bestimmt ist, wobei das Strukturteil aus einem Rohling (1) gebildet ist, der Verstärkungsfasern aufweist, die in eine thermoplastische Matrix eingelassen sind, wobei die Herstellungsvorrichtung (2) aufweist:
- ein Stützorgan (20) eines Rohlings (1), wobei sich das Stützorgan (20) gemäß einer Längsachse (X) erstreckt,
- mindestens ein Heizorgan (3), das ausgelegt ist, um einen lokalen Abschnitt des Rohlings (1) auf eine Temperatur über 300 °C zu erwärmen, die erlaubt, die thermoplastische Matrix des Rohlings (1) formbar zu machen,
- mindestens ein Kühlorgan (4), das ausgelegt ist, um den lokalen Abschnitt des Rohlings (1) auf eine Temperatur zu kühlen, die erlaubt, die thermoplastische Matrix des Rohlings (1) zu verfestigen,
- mindestens ein Hauptkompressionsorgan (6, 7, 8), das ausgelegt ist, um den lokalen Abschnitt des Rohlings (1) gegen das Stützorgan (20) derart zu komprimieren, dass seine Porosität verringert wird, wobei sich das Hauptkompressionsorgan (6, 7, 8) zwischen dem Heizorgan (3) und dem Kühlorgan (4) befindet,
- ein Verlagerungssystem (9) von vorn nach hinten gemäß der Längsachse (X) des Heizorgans (3), des Kompressionsorgans (6, 7, 8) und des Kühlorgans (4) relativ zum Stützorgan (20) derart, dass jeder lokale Abschnitt des Rohlings (1) aufeinanderfolgend konsolidiert wird, und
- mindestens ein Modul (22), umfassend ein Gestell (52), das ausgelegt ist, um vom Verlagerungssystem (9) verlagert zu werden, wobei das Hauptkompressionsorgan (6, 7, 8) mit dem Gestell (52) verbunden ist.

2. Herstellungsvorrichtung (2) nach Anspruch 1, umfassend mindestens ein vorgelagertes Kompressionsorgan (6, 7, 8), das ausgelegt ist, um den lokalen Abschnitt des Rohlings (1) gegen das Stützorgan (20) zu komprimieren, wobei sich das vorgelagerte Kompressionsorgan (6, 7, 8) vor dem Kühlorgan (4) befindet.

3. Herstellungsvorrichtung (2) nach einem der Ansprüche 1 bis 2, umfassend mindestens ein nachgelagertes Kompressionsorgans (6, 7, 8), das ausgelegt ist, um den lokalen Abschnitt des Rohlings (1) gegen das Stützorgan (20) zu komprimieren, wobei sich das nachgelagerte Kompressionsorgans (6, 7, 8) nach dem Heizorgan (3) befindet.

4. Herstellungsvorrichtung (2) nach einem der Ansprüche 1 bis 3, umfassend eine Vielzahl von Hauptkompressionsorganen (6, 7, 8), insbesondere mindestens ein vertikales Kompressionsorgan (8), mindestens ein seitliches Kompressionsorgan (6) und mindestens ein schräges Kompressionsorgan (7).

5. Herstellungsvorrichtung (2) nach einem der Ansprüche 1 bis 4, wobei das Heizorgan (3) mit dem Gestell (52) des Moduls (22), vorzugsweise nach dem Hauptkompressionsorgan (6, 7, 8) verbunden ist.

6. Herstellungsvorrichtung (2) nach einem der Ansprüche 1 bis 5, wobei, wobei die Vorrichtung mindestens ein Kühlmodul (23) aufweist, das ein Gestell (53) aufweist, das ausgelegt ist, um von dem Verlagerungssystem (9) verlagert zu werden, das Kühlorgan (4) mit dem Gestell verbunden ist.

7. Herstellungsvorrichtung (2) nach einem der Ansprüche 1 bis 6, wobei das Heizorgan (3) einen U-förmigen Querschnitt derart aufweist, dass eine gleichmäßige Erwärmung eines lokalen Abschnitts des Rohlings (1) erlaubt wird, der einen U-förmigen Querschnitt hat.

8. Herstellungsvorrichtung (2) nach einem der Ansprüche 1 bis 7, wobei jedes Kompressionsorgan mindestens ein Walzorgan (60, 70, 80) derart aufweist, dass eine Kompression bei seiner Verlagerung durch das Verlagerungssystem (9) erlaubt wird.

9. Verfahren zur Herstellung eines thermoplastischen Strukturteils auf der Basis einer Herstellungsvorrichtung (2) nach einem der Ansprüche 1 bis 8, das zur Integration in eine Primärstruktur eines Flugzeugs bestimmt ist, aus einem Rohling (1), der Verstärkungsfasern aufweist, die in eine thermoplastische Matrix eingelassen sind, wobei der Rohling auf einem Stützorgan (20) gestützt wird, das sich gemäß einer Längsachse (X) erstreckt, wobei das Verfahren aufweist:
- einen Schritt des Erwärmens eines lokalen Abschnitts des Rohlings (1) auf eine Temperatur über 300 °C, wodurch erlaubt wird, die thermoplastische Matrix des Rohlings (1) zu schmelzen, dann
- einen Schritt des Komprimierens des lokalen Abschnitts des Rohlings (1) gegen das Stützorgan (20) derart, dass dessen Dichte erhöht wird, dann
- einen Schritt des Kühlens des lokalen Abschnitts des Rohlings (1) auf eine Temperatur, wodurch erlaubt wird, die thermoplastische Matrix des Rohlings (1) zu verfestigen.

10. Herstellungsverfahren nach Anspruch 9, wobei jeder lokale Abschnitt des Rohlings (1) aufeinanderfolgend erwärmt, komprimiert und abgekühlt wird.

## Claims

1. A device (2) for manufacturing a structural thermoplastic part, for being integrated into a primary structure of a plane, said structural part being formed from a blank part (1) comprising reinforcing fibres embedded into a thermoplastic matrix, the manufacturing device (2) comprising:
- a support member (20) for a blank part (1), the support member (20) extending along a longitudinal axis (X),
- at least one heating member (3) configured to heat a local portion of the blank part (1) to a temperature greater than 300°C for making the thermoplastic matrix of the blank part (1) malleable,
- at least one cooling member (4) configured to cool the local portion of the blank part (1) to a temperature for solidifying the thermoplastic matrix of the blank part (1),
- at least one main compression member (6, 7, 8) configured to compress the local portion of the blank part (1) against the support member (20) so as to decrease its porosity, the main compression member (6, 7, 8) being located between the heating member (3) and the cooling member (4),
- a system for moving (9), upstream to downstream along the longitudinal axis (X) of the heating member (3), the compression member (6, 7, 8) and the cooling member (4) relative to the support member (20) so as to strengthen each local portion of the blank part (1) successively and
- at least one module (22) comprising a framework (52) configured to be moved by the moving system (9), the main compression member (6, 7, 8) being connected to said framework (52).

2. The manufacturing device (2) according to claim 1, comprising at least one upstream compression member (6, 7, 8) configured to compress the local portion of the blank part (1) against the support member (20), the upstream compression member (6, 7, 8) being located upstream of the cooling member (4).

3. The manufacturing device (2) according to one of claims 1 to 2, comprising at least one downstream compression member (6, 7, 8) configured to compress the local portion of the blank part (1) against the support member (20), the downstream compression member (6, 7, 8) being located downstream of the heating member (3).

4. The manufacturing device (2) according to one of claims 1 to 3, comprising a plurality of main compression members (6, 7, 8), in particular, at least one vertical compression member (8), at least one side compression member (6) and at least one slanting compression member (7).

5. The manufacturing device (2) according to one of claims 1 to 4, wherein, the heating member (3) is connected to the framework (52) of said module (22), preferably, downstream of said main compression member (6, 7, 8).

6. The manufacturing device (2) according to one of claims 1 to 5, wherein, the device comprising at least one cooling module (23) comprising a framework (53) configured to be moved by the moving system (9), the cooling member (4) is connected to said framework.

7. The manufacturing device (2) according to one of claims 1 to 6, wherein the heating member (3) has a U-shaped cross-section so as to enable uniform heating of a local portion of the blank part (1) having a U-shaped cross-section.

8. The manufacturing device (2) according to one of claims 1 to 7, wherein each compression member comprises at least one rolling member (60, 70, 80) so as to enable compression when moved by the moving system (9).

9. A method for manufacturing a structural thermoplastic part from a manufacturing device (2) according to one of claims 1 to 8, for being integrated into a primary structure of a plane, from a blank part (1) comprising reinforcing fibres embedded into a thermoplastic matrix, the blank part being supported on a support member (20) extending along a longitudinal axis (X), the method comprises:
- a step of heating a local portion of the blank part (1) to a temperature greater than 300°C for melting the thermoplastic matrix of the blank part (1) and then
- a step of compressing the local portion of the blank part (1) against the support member (20) so as to increase its density, and then
- a step of cooling said local portion of the blank part (1) to a temperature for solidifying the thermoplastic matrix of the blank part (1).

10. The manufacturing method according to claim 9, wherein, each local portion of the blank part (1) is successively heated, compressed and cooled.
